# EUROPÄISCHE PATENTSCHRIFT

(11) **EP 0 568 892 B1**
(45) Veröffentlichungstag und Bekanntmachung des Hinweises auf die Patenterteilung: **17.09.1997**
(21) Anmeldenummer: 93106734.2
(22) Anmeldetag: 26.04.1993
(51) Int. Cl.: C09B 62/085

(54) **Monoazoreaktivfarbstoffe**
Monoazo reactive dyes
Colorants réactifs monoazo

(30) Priorität: 08.05.1992 DE 4215207
(43) Veröffentlichungstag der Anmeldung: 10.11.1993
(73) Patentinhaber: BAYER AG, 51368 Leverkusen (DE)
(72) Erfinder: Bootz, Konrad, Dr., W-5802 Wetter 4 (DE); Henk, Hermann, Dr., W-5000 Köln 80 (DE)

(56) Entgegenhaltungen:
- FR-A- 2 119 573

## Beschreibung

Die vorliegende Erfindung betrifft Monoazoreaktivfarbstoffe, ihre Herstellung und Verwendung.

Monoazoreaktivfarbstoffe sind aus einem umfangreichen Stand der Technik bekannt, verwiesen wird beispielsweise auf DE-A-2 162 612, DE-A-2 221 064 und US-A-3 926 944. Die bekannten Monoazoreaktivfarbstoffe weisen aber noch Nachteile hinsichtlich Anwendung und Echtheiten auf.

Die vorliegende Erfindung betrifft Monoazoreaktivfarbstoffe, die in Form der freien Säure der Struktur (1) 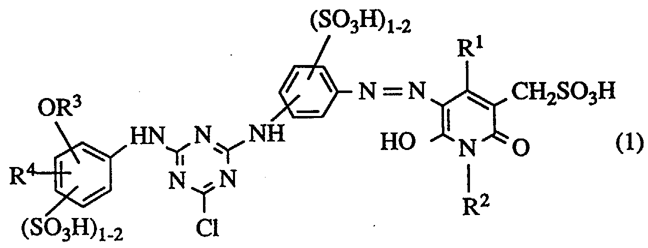 entsprechen, wobei
- R¹ =: H, CH₃, CO₂H, CH₂SO₃H, C₆H₅; 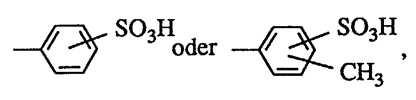
- R² =: H, CH₃, C₂H₅, CH₂CH₂SO₃H, CH₂CH₂OSO₃H, 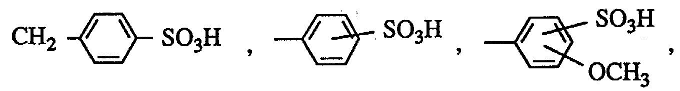 oder 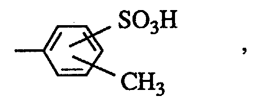
- R³ =: C₁-C₆-Alkyl oder Aryl, die gegebenenfalls substituiert sein können, insbesondere geeignete Substituenten sind OH, C₁-C₄-Alkoxy, Halogen, Carboxy oder Sulfo und
- R⁴ =: H, C₁-C₆-Alkyl oder OR³.

Hervorzuheben sind Farbstoffe der Struktur (2) 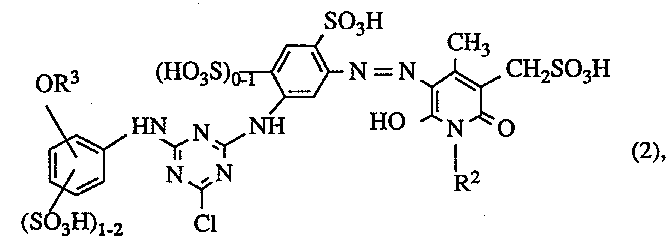 wobei
- R² =: H, CH₃ oder C₂H₅ und
- R³ =: C₁-C₆-Alkyl,
sowie Farbstoffe der Struktur (3) 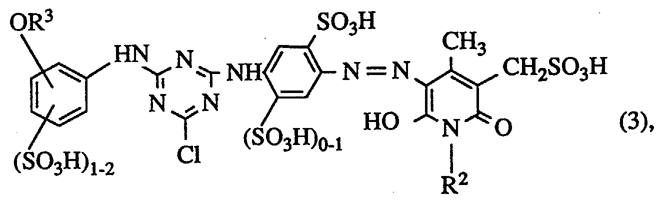 wobei
- R² =: H, CH₃ oder C₂H₅ und
- R³ =: C₁-C₆-Alkyl.

Bevorzugt sind Farbstoffe der Struktur (4) 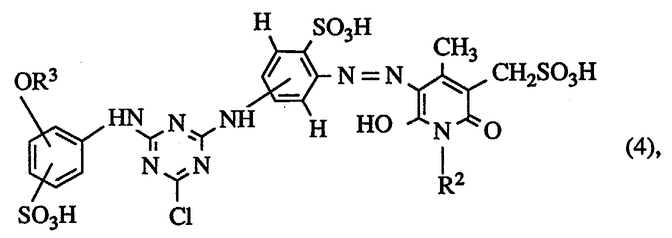 wobei
- R² =: H, CH₃ oder C₂H₅ und
- R³ =: C₁-C₆-Alkyl.

Besonders bevorzugt sind Farbstoffe der Struktur (5) 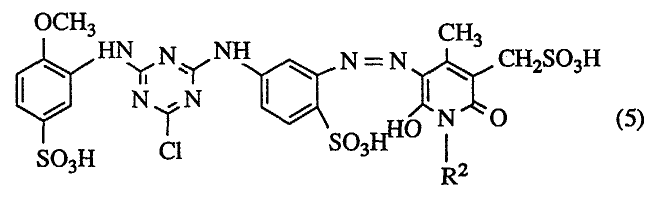 mit
- R² =: H, CH₃ oder C₂H₅.

Gegenstand der Erfindung ist auch das Verfahren zur Herstellung der Reaktivfarbstoffe der Struktur (1), indem man z.B.
a) Aminoazofarbstoffe der Struktur (6) 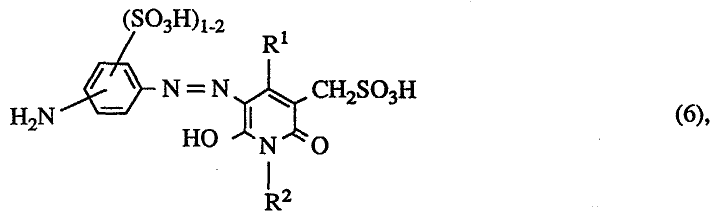 mit Cyanurchlorid und anschließend mit Amino-alkoxy(bzw. phenoxy)benzolmono-bzw. -disulfonsäuren (6a) 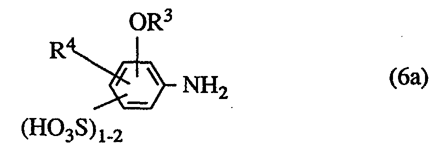 in Gegenwart säurebindender Mittel kondensiert,
   wobei R¹, R², R³ und R⁴ die anfangs genannte Bedeutung haben,
   oder aber
b) Aminoazofarbstoffe der Struktur (6) mit dem Monokondensationsprodukt (6b) aus Cyanurchlorid und Amino-alkoxy(bzw.phenoxy)benzolmono-bzw.-disulfonsäure in Gegenwart säurebindender Mittel kondensiert, 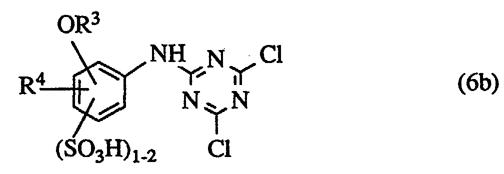 wobei
   R¹, R², R³ und R⁴ die anfangs genannte Bedeutung haben,
   oder aber
c) das Kondensationsprodukt (6c) aus Diaminobenzolmono- bzw. -disulfonsäure, Cyanurchlorid und Amino-alkoxy(bzw.phenoxy)benzolmono- bzw. -disulfonsäure in üblicher Weise diazotiert 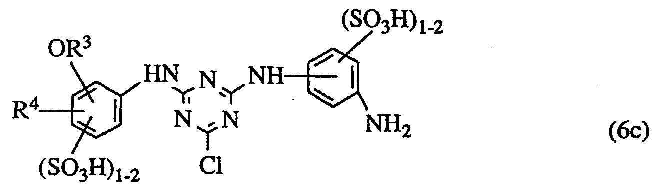 und auf Pyridone der Struktur (7) oder (8) 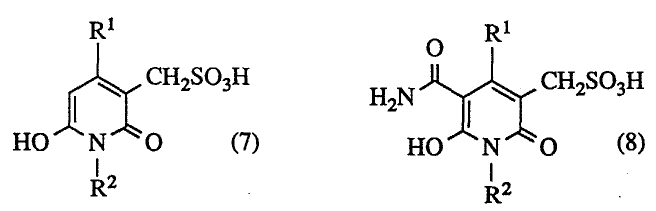 wie sie z.B. in der DE-A- 2 162 858 aufgeführt sind,
   wobei
   R¹,R², R³ und R⁴ die anfangs genannte Bedeutung zukommt,
   kuppelt.

Die Aminoazoverbindungen der Struktur (6) erhält man durch Kuppeln von diazotierter Acylamino-aminobenzolmono- bzw. -disulfonsäuren auf Pyridone der Struktur (7) und (8) und anschließende Verseifung der resultierenden Acylaminoazoverbindungen.

Ausgewählte Beispiele für substituierte Aminobenzolsulfonsäuren der Struktur (6a) sind u.a.:
5-Amino-2-methoxybenzolsulfonsäure,
5-Amino-2-ethoxybenzolsulfonsäure,
3-Amino-4-methoxybenzolsulfonsäure,
3-Amino-4-phenoxybenzolsulfonsäure,
2-Amino-5-methoxybenzolsulfonsäure,
2-Amino-5-methoxybenzol-1,4-disulfonsäure,
5-Amino-2-phenoxybenzolsulfonsäure,
4-Amino-5-methoxy-2-methylbenzolsulfonsäure,
3-Amino-4-methoxy-6-methylbenzolsulfonsäure.

Die angegebenen Formeln sind die der freien Säuren. Bei der Herstellung werden im allgemeinen die Salze erhalten, insbesondere die Alkalisalze wie Natrium-, Kalium- oder Lithiumsalze.

Die Farbstoffe können auch als konzentrierte Lösungen eingesetzt werden.

Die erfindungsgemäßen Farbstoffe eignen sich hervorragend zum Färben und Bedrucken von natürlichen und synthetischen OH- oder amidgruppenhaltigen Materialien, insbesondere solchen aus Cellulose und Polyamiden. Sie sind besonders geeignet zum Färben von Cellulosematerialien in Auszieh- und Klotz-Kaltverweilverfahren, sowie zum Bedrucken von Baumwolle und Zellwolle.

Man erhält bei hohen Fixierausbeuten Färbungen mit guten Allgemeinechtheiten, insbesondere Naßechtheiten.

### Beispiel 1

a) 33,4 g 4-Acetmnino-2-aminobenzolsulfonsäure werden in bekannter Weise unter sauren Bedingungen mit Natriumnitritlösung diazotiert. Zur fertigen Diazoniumsalzsuspension fügt man 39,5 g 3-Aminocarbonyl-1,4-dimethyl-5-sulfomethyl-6-hydroxy-2-pyridon und stellt den pH der Reaktionsmischung langsam mit 20 %iger Sodalösung auf pH 7,5 und hält ihn konstant. Nach 30 Minuten ist die Kupplung beendet.
   Die Farbstoffmischung (Volumen ca. 700 ml) wird nun mit 100 ml konzentrierter Salzsäure sauer gestellt und für 1 Stunde auf 95-98°C erwärmt. Dabei resultiert kurzzeitig eine tiefgelbe Lösung. Gegen Ende der Verseifung fällt die Aminoazoverbindung in kristalliner Form aus. Es wird auf Raumtemperatur abgekühlt und nach Zugabe von 40 g Kochsalz abgesaugt.
   Die feuchte gelbe Paste wird in 400 ml Wasser angerührt und mit Lithiumhydroxidlösung bei pH 6,5 gelöst. Diese Lösung wird in eine Vorlage aus 150 g Eis, 1 Tropfen Emulgator sowie 26,7 g Cyanurchlorid eingetragen, wobei durch Zugabe von 2n Natronlauge konstant zwischen pH 5,5 und 6,0 gehalten wird. Nach einer Nachrührzeit von 45 Minuten klärt man von nichtumgesetztem Cyanurchlorid. Zu dieser ersten Kondensation läßt man 29,4 g 3-Amino-4-methoxybensolsulfonsäure, neutral gelöst in 130 ml Wasser, laufen und erwärmt auf 40°C. Die Acylierungsreaktion wird durch Zudosieren von 2n Natronlauge bei pH 6,5-7,0 gehalten. Wenn keine pH-Änderung mehr zu beobachten ist, fügt man 150 g Kochsalz hinzu, isoliert und trocknet bei 40°C im Vakuum. Man erhält 125 g eines salzhaltigen Farbstoffpulvers, das Baumwolle in brillantem, grünstichig gelbem Ton färbt und dem nachstehende Struktur in Form der freien Säure zukommt (λₘₐₓ(H₂O) = 422 nm). 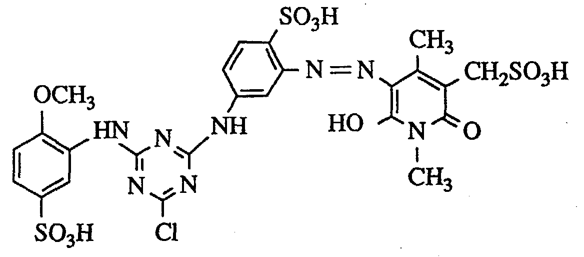 Derselbe Farbstoff kann auf folgenden, alternativen Wegen hergestellt werden:
b) 29,4 g 3-Amino-4-methoxybenzolsulfonsäure werden in 260 ml Wasser neutral gelöst und zu einer Suspension aus 27,0 g Cyanurchlorid, 1 Tropfen Emulgator und 250 g Eis gegeben, wobei durch Zudosierung von 2n Natronlauge konstant bei pH 4,5-5,5 gehalten wird. Nach Beendigung der Acylierung klärt man vom unverbrauchten Cyanurchlorid und tropft zur in Beispiel 1a beschriebenen Lösung der Farbbase. Die Kondensation wird bei 40°C und pH 6,5-7,0 durchgeführt. Der fertige Farbstoff kann durch Aussalzen oder Sprühtrocknung isoliert werden.
c) 29,4 g 3-Amino-4-methoxybenzolsulfonsäure werden in 130 ml Wasser neutral gelöst und zu einer Suspension aus 26,8 g Cyanurchlorid, 1 Tropfen Emulgator und 150 g Eis gegeben, wobei durch Zudosierung von 2n Natronlauge konstant bei pH 4,5-5,5 gehalten wird. Nach Beendigung der Acylierung läßt man 27,2 g 2,4-Diaminobenzolsulfonsäure, neutral gelöst in 120 ml Wasser, hinzulaufen und erwärmt auf 40°C. Während dieser Kondensation wird durch Zugabe von 2n Natronlauge pH 6-7 gehalten.
   Zur Vervollständigung der Reaktion wird 1 Stunde bei 40°C nachgerührt, anschließend wird geklärt. Man versetzt diese Lösung mit 6,9 g Natriumnitrit (fest) und 40 g Kochsalz und läßt sie in eine Vorlage aus 150 g Eis und 40 ml konz. Salzsäure fließen. Es wird 15 Minuten nachgerührt und der Nitritüberschuß mit Amidosulfonsäure entfernt.
   Zu dieser Suspension gibt man 39,5 g 3-Aminocarbonyl-1,4-dimethyl-5-sulfomethyl-6-hydroxy-2-pyridon (fest) und stellt mit 2n Natronlauge langsam auf pH 6,7-7,0 und hält konstant. Nach 30 Minuten ist die Kupplung beendet. Der gelbe Farbstoff wird durch Sprühtrocknung isoliert.
d) Die in Beispiel 1c) verwendete Diazokomponente kann auch hergestellt werden, indem man Cyanurchlorid zuerst mit 2,4-Diaminobenzolsulfonsäure und erst in zweiter Stufe mit 3-Amino-4-methoxybenzolsulfonsäure kondensiert. Diazotierung und Kupplung werden dann wie in Beispiel 1c) durchgeführt.

Durch Verwendung vergleichbarer Amino-alkoxy(bzw. phenoxy)benzolmono- bzw. -disulfonsäuren (vgl. Struktur 6a) oder alternativer Phenylendiamin-Komponenten gelangt man zu ebenfalls wertvollen Farbstoffen.

### Beispiel 2

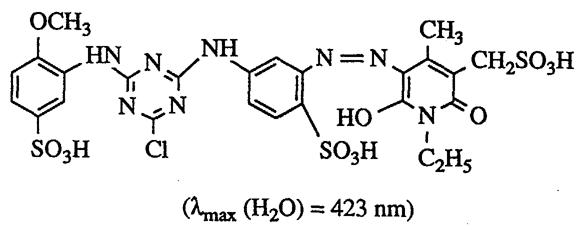

### Beispiel 3

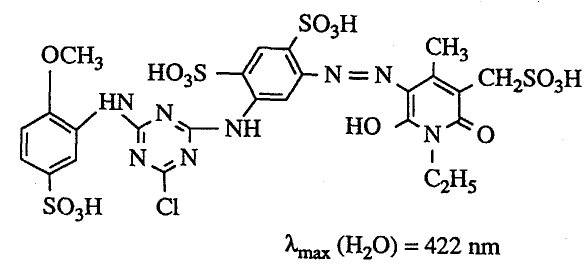

### Beispiel 4

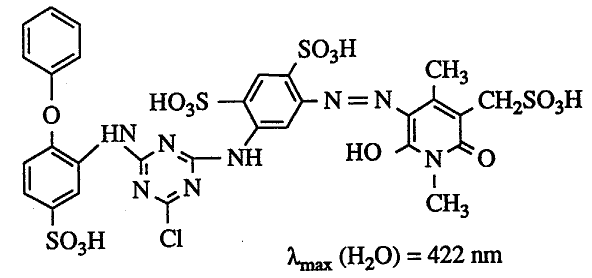

### Beispiel 5

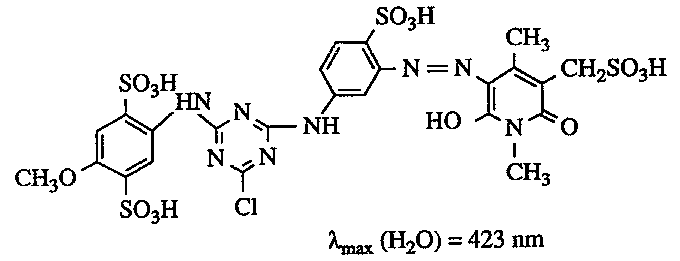

### Beispiel 6

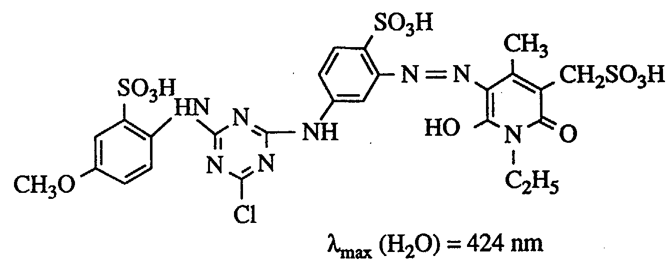

### Beispiel 7

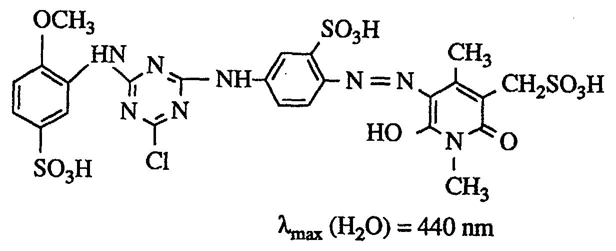

### Beispiel 8

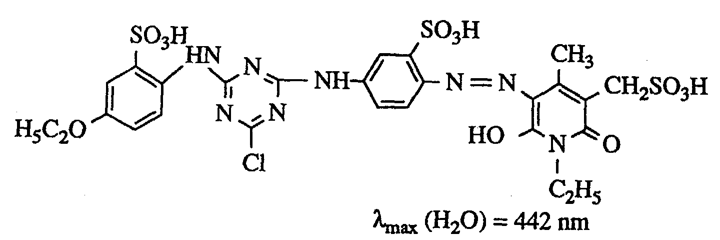

## Patentansprüche

1. Monoazoreaktivfarbstoffe, die in Form der freien Säure der Struktur 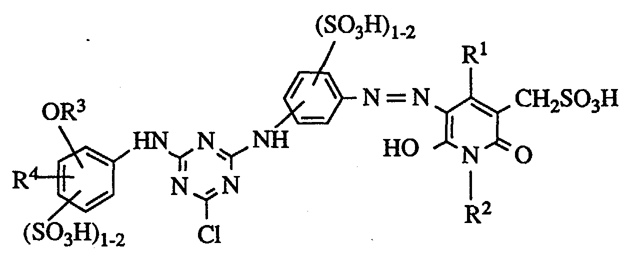 entsprechen, wobei
R¹ = H, CH₃, CO₂H, CH₂SO₃H, C₆H₅, 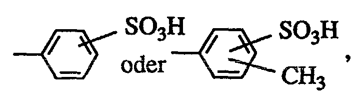
R² = H, CH₃, C₂H₅, CH₂CH₂SO₃H, CH₂CH₂OSO₃H, 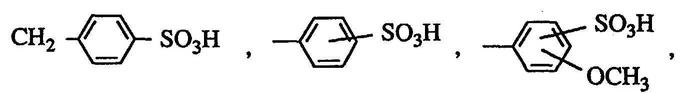 oder 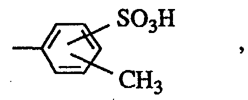
R³ = C₁-C₆-Alkyl oder Aryl, die gegebenenfalls substituiert sein können, und
R⁴ = H, C₁-C₆-Alkyl oder OR³.

2. Farbstoffe gemäß Anspruch 1 der Struktur 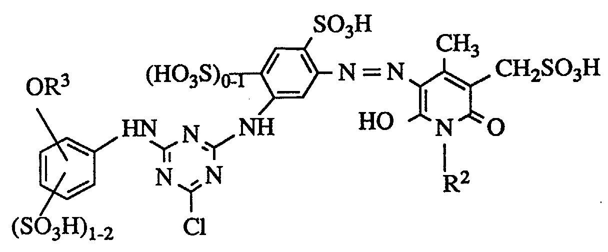 wobei
R² = H, CH₃ oder C₂H₅ und
R³ = C₁-C₆-Alkyl.

3. Farbstoffe gemäß Anspruch 1 der Struktur 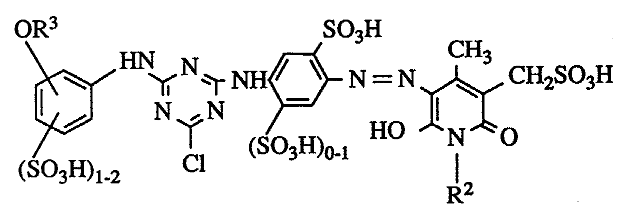 wobei
R² = H, CH₃ oder C₂H₅ und
R³ = C₁-C₆-Alkyl.

4. Farbstoffe gemäß Anspruch 1 der Struktur 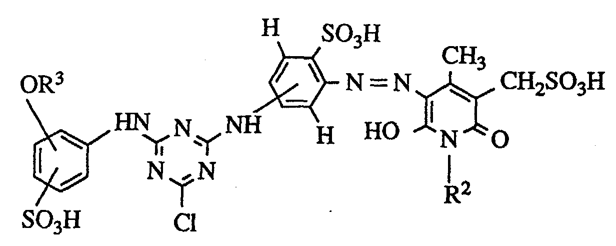 wobei
R² = H, CH₃ oder C₂H₅ und
R³ = C₁-C₆-Alkyl.

5. Farbstoffe gemäß Anspruch 1 der Struktur 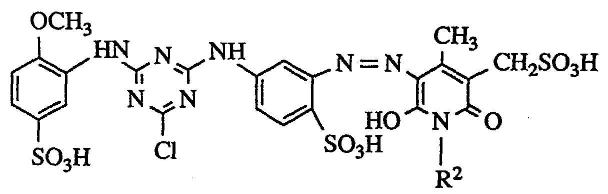 mit
R² = H, CH₃ oder C₂H₅.

6. Verfahren zur Herstellung der Reaktivfarbstoffe gemäß Anspruch 1, indem man
a) Aminoazofarbstoffe der Struktur (6) 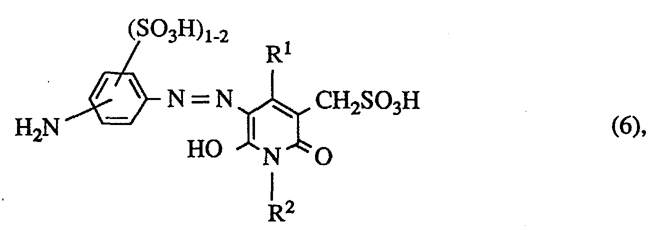 mit Cyanurchlorid und anschließend mit Amino-alkoxy(bzw. phenoxy)benzolmono- bzw. -disulfonsäuren (6a) 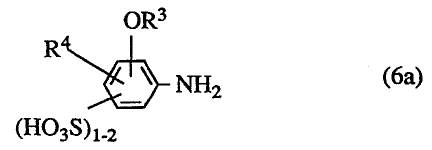 in Gegenwart säurebindender Mittel kondensiert,
wobei
R¹, R², R³ und R⁴ die in Anspruch 1 genannte Bedeutung haben,
oder aber
b) Aminoazofarbstoffe der Struktur (6) mit dem Monokondensationsprodukt (6b) aus Cyanurchlorid und Amino-alkoxy(bzw.phenoxy)benzolmono-bzw.-disulfonsäure in Gegenwart säurebindender Mittel kondensiert, 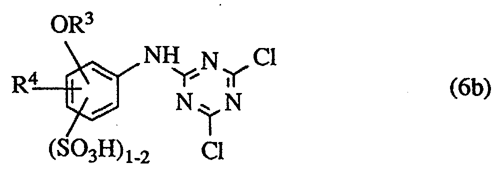 wobei
R¹, R², R³ und R⁴ die anfangs genannte Bedeutung haben,
oder aber
c) das Kondensationsprodukt (6c) aus Diaminobenzolmono- bzw. -disulfonsäure, Cyanurchlorid und Amino-alkoxy(bzw.phenoxy)benzolmono- bzw. -disulfonsäure in üblicher Weise diazotiert 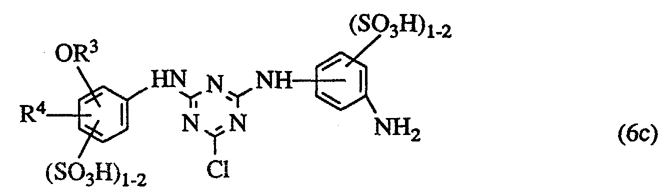 und auf Pyridone der Struktur (7) oder (8) 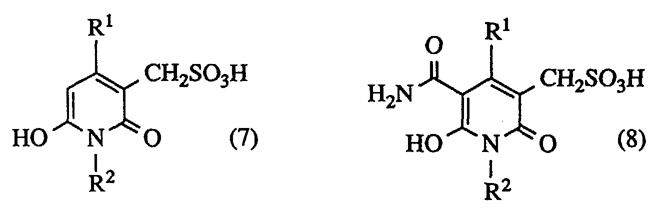 wobei
R¹, R², R³ und R⁴ die in Anspruch 1 genannte Bedeutung zukommt,
kuppelt.

7. Verfahren zum Färben und Bedrucken von natürlichen und synthetischen OH- oder amidgruppenhaltigen Materialien, insbesondere solchen aus Cellulose und Polyamiden, dadurch gekennzeicnet, daß man einen Farbstoff gemäß Anspruch 1 verwendet.

## Claims

1. Monoazo reactive dyestuffs which, in the form of the free acid, correspond to the structure 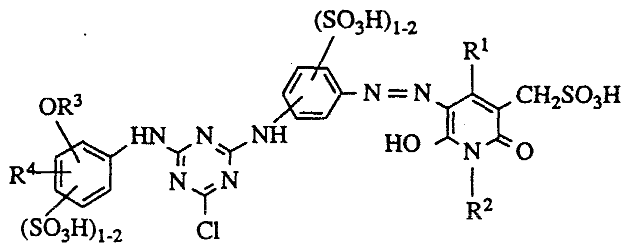 wherein
R¹ = H, CH₃, CO₂H, CH₂SO₃H, C₆H₅, 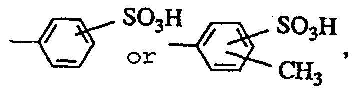
R² = H, CH₃, C₂H₅, CH₂CH₂SO₃H, CH₂CH₂OSO₃H, 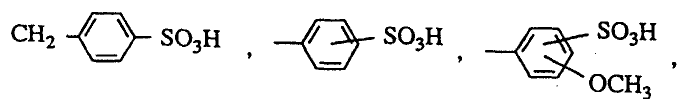 or 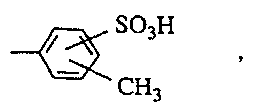
R³ = C₁-C₆-alkyl or aryl, which can optionally be substituted, and
R⁴ = H, C₁-C₆-alkyl or OR³.

2. Dyestuffs according to Claim 1, of the structure 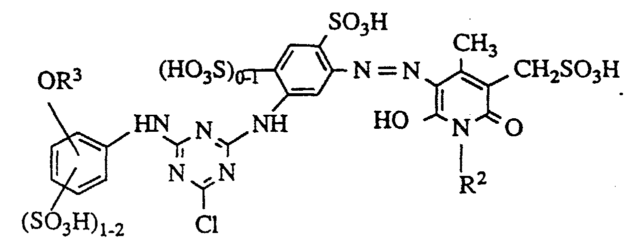 wherein
R² = H, CH₃ or C₂H₅ and
R³ = C₁-C₆-alkyl.

3. Dyestuffs according to Claim 1, of the structure 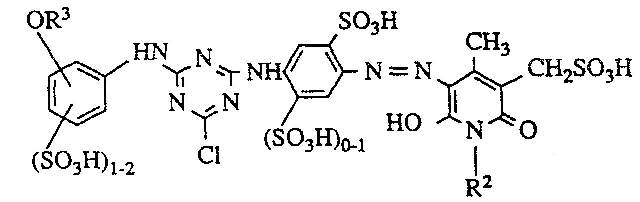 wherein
R² = H, CH₃ or C₂H₅ and
R³ = C₁-C₆-alkyl.

4. Dyestuffs according to Claim 1, of the structure 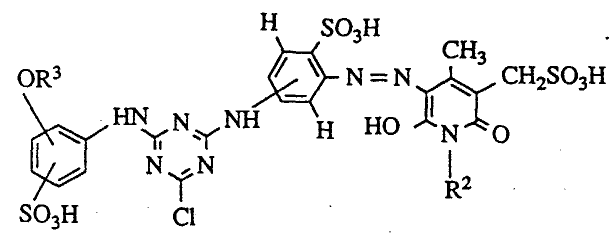 wherein
R² = H, CH₃ or C₂H₅ and
R³ = C₁-C₆-alkyl.

5. Dyestuffs according to Claim 1, of the structure 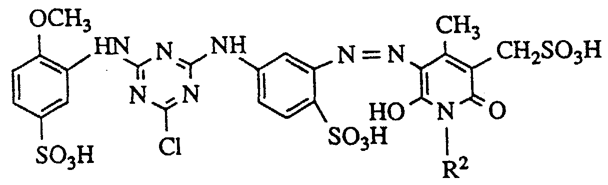 where
R² = H, CH₃ or C₂H₅.

6. Process for the preparation of the reactive dyestuffs according to Claim 1, by a procedure in which
a) aminoazo dyestuffs of structure (6) 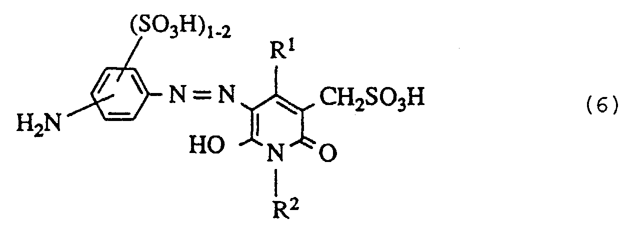 are subjected to a condensation reaction with cyanuric chloride and then with amino-alkoxy(or phenoxy)-benzenemono- or -disulphonic acids (6a) 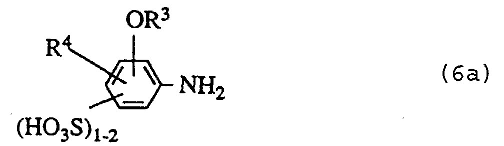 in the presence of acid-binding agents,
wherein
R¹, R², R³ and R⁴ have the meaning given in Claim 1,
or
b) aminoazo dyestuffs of structure (6) are subjected to a condensation reaction with the monocondensation product (6b) from cyanuric chloride and an amino-alkoxy(or phenoxy)benzenemono- or -disulphonic acid in the presence of acid-binding agents 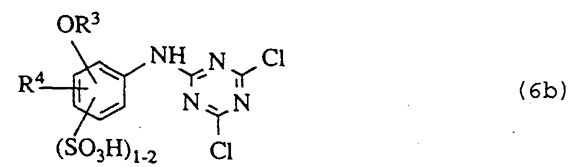 wherein
R¹, R², R³ and R⁴ have the abovementioned meaning,
or
c) the condensation product (6c) from diaminobenzenemono- or -disulphonic acid, cyanuric chloride and an amino-alkoxy(or phenoxy)benzenemono- or -disulphonic acid is diazotised in the customary manner 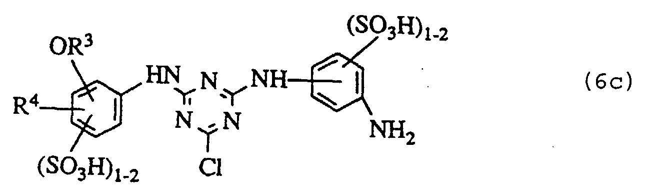 and the diazotisation product is coupled to pyridones having the structure (7) or (8) 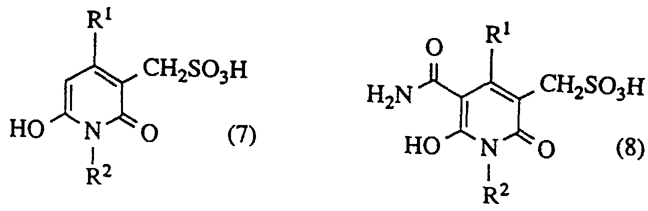 wherein
R¹, R², R³ and R⁴ have the meaning given in Claim 1.

7. Process for dyeing and printing naturally occurring and synthetic materials containing OH groups or amide groups, in particular those of cellulose and polyamides, characterised in that a dyestuff according to Claim 1 is used.

## Revendications

1. Colorants réactifs monoazoïques qui, à l'état d'acides libres, possèdent la structure 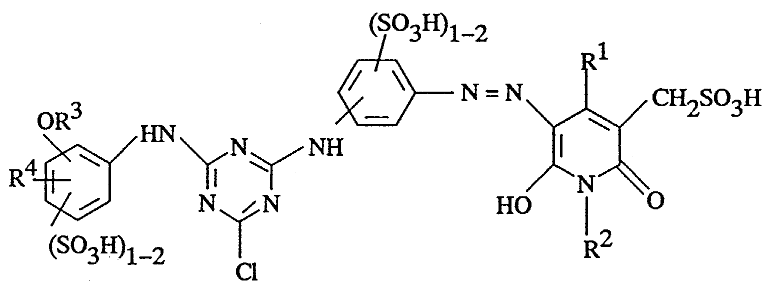 dans laquelle
R¹ = H, CH₃, CO₂H, CH₂SO₃H, C₆H₅, 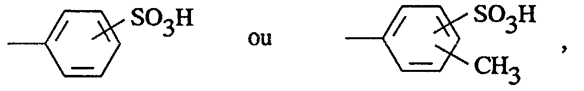
R² = H, CH₃, C₂H₅, CH₂CH₂SO₃H, CH₂CH₂OSO₃H, 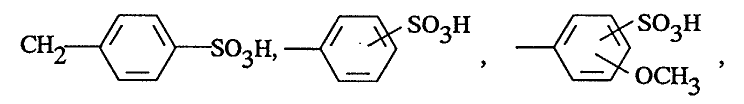 ou 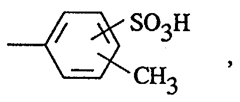
R³ = alkyle en C₁-C₆ ou aryle, éventuellement substitué, et
R⁴ = H, alkyle en C₁-C₆ ou OR³.

2. Colorants selon la revendication 1, de structure 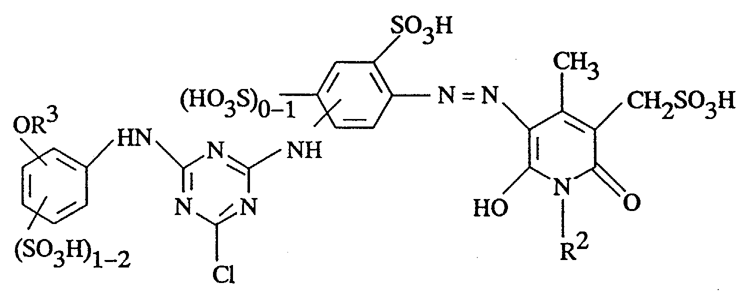 dans laquelle
R² = H, CH₃ ou C₂H₅ et
R³ = alkyle en C₁-C₆.

3. Colorants selon la revendication 1, de structure 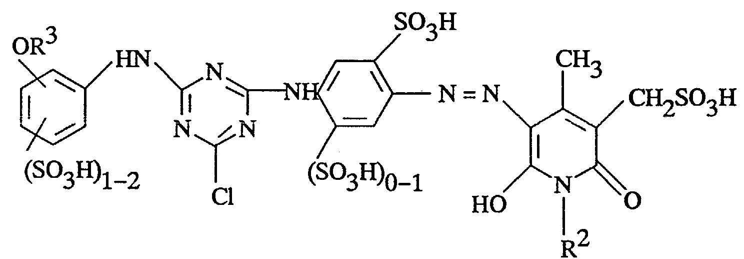 dans laquelle
R² = H, CH₃ ou C₂H₅ et
R³ = alkyle en C₁-C₆.

4. Colorants selon la revendication 1 de structure 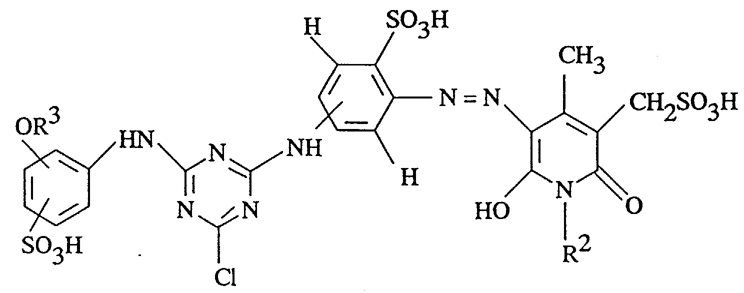 dans laquelle
R² = H, CH₃ ou C₂H₅ et
R³ = alkyle en C₁-C₆.

5. Colorants selon la revendication 1, de structure 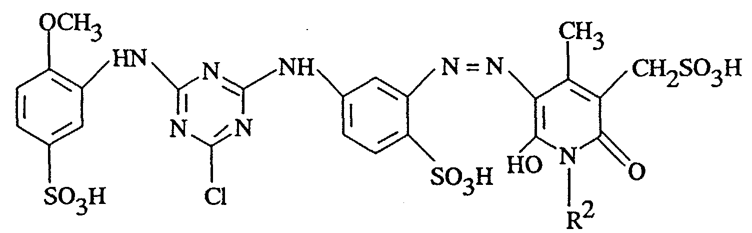 dans laquelle
R² = H, CH₃ ou C₂H₅.

6. Procédé de préparation des colorants réactifs de la revendication 1, qui consiste
a) à condenser en présence de capteurs d'acides des colorants amino-azoïques de structure (6) 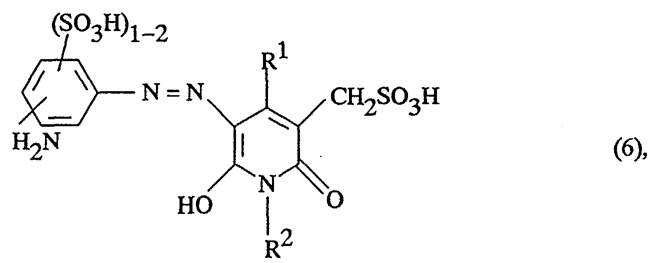 avec le chlorure de cyanuryle puis avec des acides amino-alcoxy(ou phénoxy)benzènemono- ou -disulfoniques (6a) 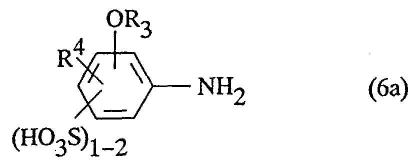 R¹, R², R³ et R⁴ ayant les significations indiquées dans la revendication 1, ou bien
b) à condenser des colorants aminoazoïques de structure (6) avec le produit de monocondensation (6b) du chlorure de cyanuryle et d'un acide amino-alcoxy(ou phénoxy)benzènemono- ou -disulfonique en présence de capteurs d'acides, 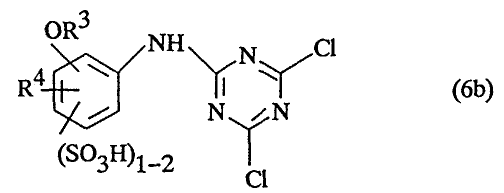 dans laquelle
R¹, R², R³ et R⁴ ayant les significations indiquées ci-dessus,
ou bien encore
c) à diazoter de la manière habituelle le produit de condensation (6c) de l'acide diaminobenzènemono- ou -disulfonique, du chlorure de cyanuryle et d'un acide amino-alcoxy (ou phénoxy)benzènemono- ou -disulfonique. 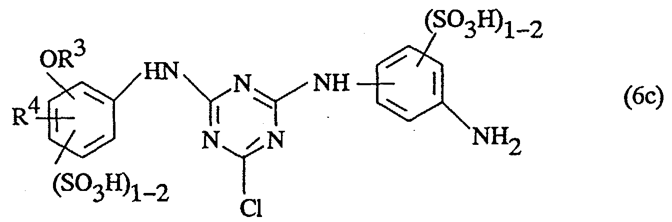 puis à copuler sur des pyridones de structure (7) ou (8). 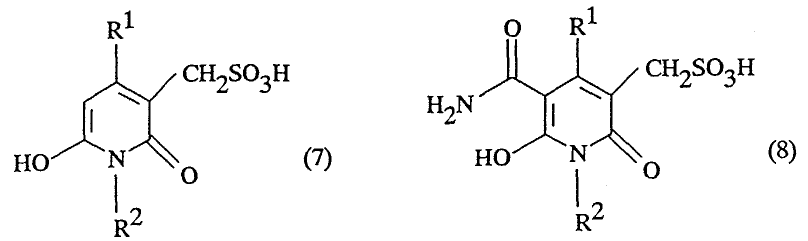 R¹, R², R³ et R⁴ ayant les significations indiquées dans la revendication 1.

7. Procédé pour la teinture et l'impression de matières naturelles et synthétiques contenant des groupes OH ou des groupes amides, en particulier en cellulose et en polyamides, caractérisé en ce que l'on utilise à cet effet un colorant selon la revendication 1.
